# FASCICULE DE BREVET EUROPEEN

(11) **EP 1 257 426 B1**
(45) Date de publication et mention de la délivrance du brevet: **04.01.2006**
(21) Numéro de dépôt: 01916972.1
(22) Date de dépôt: 02.02.2001
(51) Int. Cl.: B60C 15/04, B60C 15/06

(54) **BOURRELET DE PNEUMATIQUE AVEC NAPPES TEXTILES**
REIFENWULST MIT TEXTILBAHNEN
TYRE BEAD WITH TEXTILE LAYERS

(30) Priorité: 10.02.2000 FR 0001686
(43) Date de publication de la demande: 20.11.2002
(73) Titulaire: Société de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: PATTERSON, Forrest, F-63140 Chatel-Guyon (FR); AHOUANTO, Michel, F-63530 Enval (FR)
(74) Mandataire: Diernaz, Christian
(86) Numéro de dépôt international: PCT/EP2001/001139
(87) Numéro de publication internationale: WO 2001/058704

(56) Documents cités:
- EP-A- 0 672 547
- EP-A- 0 823 341
- US-A- 5 702 548
- PATENT ABSTRACTS OF JAPAN vol. 018, no. 304 (M-1619), 10 juin 1994 (1994-06-10) -& JP 06 064411 A (TOYO TIRE & RUBBER CO LTD), 8 mars 1994 (1994-03-08)
- PATENT ABSTRACTS OF JAPAN vol. 1997, no. 11, 28 novembre 1997 (1997-11-28) -& JP 09 195189 A (SUMITOMO ELECTRIC IND LTD), 29 juillet 1997 (1997-07-29)

## Description

La présente invention concerne un pneumatique à armature de carcasse radiale, et plus particulièrement la constitution des bourrelets de tels pneumatiques.

Le brevet Européen EP 0 823 341 décrit un pneumatique comprenant une armature de sommet surmontée d'une bande de roulement, deux bourrelets et au moins une nappe de carcasse radiale s'étendant d'un bourrelet à l'autre. Chaque bourrelet dudit pneumatique présente les caractéristiques suivantes :
- 1) il est dépourvu de tringle, au sens où l'homme du métier entend par tringle un élément de renforcement qui remplit généralement les deux fonctions que sont l'ancrage de l'armature de carcasse sous une pression de gonflage déterminée, et le serrage des bourrelets sur jante ;
- 2) il comporte un élément annulaire dont la résistance à la rupture en traction dans le sens longitudinal est notablement inférieure à celle qui serait nécessaire pour une tringle usuelle utilisée dans un pneumatique de même dimension, mais cependant suffisante pour permettre les opérations de confection , de retroussage, de conformation et de vulcanisation réalisées en cours de fabrication du pneumatique ;
- 3) la résistance mécanique nécessaire à l'ancrage de l'armature de carcasse est procurée généralement par deux couches dites couches de renforcement de bourrelet, disposées au contact de l'élément annulaire, ou à proximité dudit élément, les dites couches de renforcement comportant chacune des éléments de renforcement parallèles entre eux dans chaque couche et croisés d'une couche à la suivante en faisant avec la direction circonférentielle un angle supérieur à 0° et au plus égal à 10°.

Les bourrelets du pneumatique ainsi constitués permettent l'utilisation, en tant que couche de caoutchouc axialement extérieure et radialement intérieure destinée à assurer la liaison avec la jante de montage, d'un mélange à faible perte hystérétique et d'épaisseur moindre. Il s'ensuit un allégement du pneumatique, une diminution notable de la résistance au roulement tout en maintenant les propriétés de vitesse et endurance à un haut niveau.

Néanmoins les pneumatiques considérés ne présentent pas, de manière régulière dans le temps, une parfaite montabilité sur jante : de nombreux pneumatiques se montent aisément et correctement alors que certains pneumatiques réputés identiques présentent des défauts de montage qu'il est nécessaire de corriger.

Afin de remédier à ces inconvénients, l'invention propose une meilleure répartition des résistances à la rupture des éléments qui constituent le bourrelet. Ainsi le pneumatique, conforme à l'invention, comprend une armature de sommet surmontée d'une bande de roulement, ladite bande étant réunie par l'intermédiaire de deux flancs à deux bourrelets, entre lesquels s'étend au moins une nappe d'armature de carcasse, ancrée dans chaque bourrelet par enroulement autour d'un élément annulaire, dont la résistance à la rupture sous effort de tension est inférieure à la résistance à la rupture d'une tringle de pneumatique usuel de même dimension, et un ensemble d'au moins deux couches de renforcement de bourrelet disposées au contact de l'élément annulaire et composées d'éléments de renforcement parallèles entre eux dans chaque couche et croisés d'une couche à la suivante en faisant avec la direction circonférentielle un angle α vérifiant la relation 0° < α ≤ 15°. Il est caractérisé en ce que l'élément annulaire a une résistance à la rupture en tension comprise entre 3 et 5 fois la tension conférée à l'armature de carcasse par la pression de gonflage recommandée, et dont l'allongement à la rupture est compris entre 2 et 6%, l'ensemble des couches de renforcement de bourrelet ayant une résistance à la rupture comprise entre 0,5 et 1 fois la résistance à la rupture de l'élément annulaire, et la somme des résistances à la rupture de l'élément annulaire et de l'ensemble des couches de renforcement étant comprise entre 6 et 8 fois la tension conférée à l'armature de carcasse.

Il faut entendre par tension conférée à l'armature de carcasse par la pression recommandée la tension calculée par unité de longueur s'exerçant dans le plan de la tringle.

L'élément annulaire est préférentiellement métallique et plus particulièrement en acier, alors que les couches de renforcement de bourrelet sont avantageusement formées de câbles en polyamide aromatique pour permettre le moindre poids, deux couches de renforcement pouvant être les deux brins d'une nappe retournée autour de l'élément annulaire, ou pouvant être deux nappes axialement adjacentes.

Il faut entendre par résistance à la rupture d'un ensemble de couches la résistance limite obtenue par une traction s'exerçant sur un échantillon de l'ensemble des couches prélevé sur le pneumatique vulcanisé et neuf, traction s'exerçant selon un axe correspondant à la direction circonférentielle du dit pneumatique.

Comme connu, la couche de mélange caoutchouteux disposée axialement et radialement à l'extérieur du bourrelet et destinée à assurer la liaison avec la jante, a préférentiellement une épaisseur au plus égale à 2 mm, et le mélange de caoutchouc la composant un module de perte élastique G" inférieur à 1, G" étant exprimé en MPa (mégapascals), et la mesure de G" étant effectuée à 10% de cisaillement, à 50° et avec une fréquence de 10 Hz.

Les caractéristiques de l'invention seront mieux comprises à l'aide de la description qui suit et qui se réfère au dessin, illustrant à titre non limitatif des exemples d'exécution, et sur lequel :
- la figure 1 représente schématiquement une première variante de bourrelet conforme à l'invention,
- la figure 2 représente de la même manière une deuxième variante.

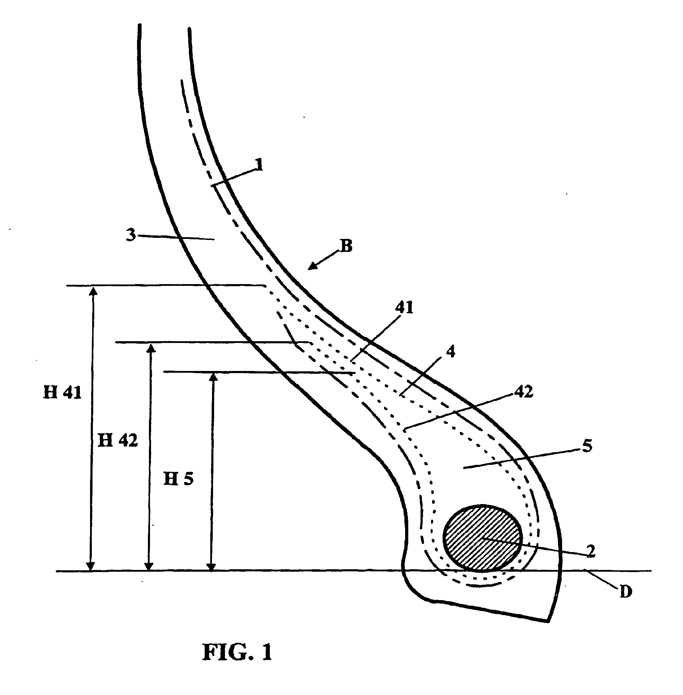

Sur la figure 1, le pneumatique conforme à l'invention et vu selon une section méridienne, comprend une armature de sommet surmontée d'une bande de roulement (non montrée). La bande de roulement est reliée à chaque bourrelet B par un flanc (3) renforcé par une nappe de carcasse (1) radiale qui s'étend de manière continue d'un bourrelet B à l'autre. Autour de l'élément annulaire (2) est enroulée, dans le cas de la première variante montrée sur la figure 1, une nappe de renforcement (4) de bourrelet pour former deux brins (41) et (42), formés d'éléments de renforcement en polyamide aromatique, parallèles entre eux dans chaque brin mais croisée d'un brin (41) à l'autre (42) en formant avec la direction circonférentielle une angle α égal à 5°. Les extrémités des deux brins (41) et (42) sont situées à des hauteurs H₄₁ et H₄₂ différentes, les dites hauteurs étant mesurées sur de perpendiculaires à une droite parallèle à l'axe de rotation du pneumatique passant par le point de l'élément annulaire (2) le plus proche dudit axe de rotation, ladite droite étant dite droite de référence D. Sur la figure 1, la hauteur H₄₁ est supérieure à la hauteur H₄₂, mais l'inverse, c'est-à-dire H₄₂ supérieure à H₄₁ donne aussi de bons résultats. Entre les deux brins (41) et (42) et radialement au dessus de l'élément annulaire (2) est disposé un profilé de mélange caoutchouteux (5) sous forme de coin sensiblement triangulaire et dont l'extrémité radialement supérieure est situé à une distance H₅ de la droite de référence D. Bien qu'existant dans l'exemple décrit, ledit profilé (5) en forme de coin n'est pas obligatoire, et le brin retourné (42) de la nappe de renforcement (4) peut être directement appliqué sur le brin (41) sans la présence du profilé (5).

L'élément annulaire (2) a une résistance à la rupture sous effort de tension, mesuré dans le sens circonférentiel, notablement inférieure à celle qui serait nécessaire à une tringle dans une enveloppe de même dimension, mais par contre très supérieure à la résistance à la rupture de l'élément annulaire décrit dans la demande citée en préambule. Pour la dimension 175/70.R.13 plus précisément étudiée, alors que la tringle métallique du pneumatique usuel a une résistance à la rupture de l'ordre de 2 000 daN, et alors que l'élément annulaire de la demande en référence a une résistance à la rupture, mesurée dans les mêmes conditions, de l'ordre de 200 daN, l'élément annulaire (2) du pneumatique conforme à l'invention a une résistance à la rupture de l'ordre de 1 000 daN. Ledit élément annulaire (2) est formé de 7 fils élémentaires de diamètre sensiblement égal à 1 mm tressés entre eux. Les dits fils, après un traitement thermique approprié, par exemple décrit dans le brevet EP 611 669 auquel il est fait référence, ont la particularité de présenter un grand allongement, de l'ordre de 6%, supérieur aux allongements normalement obtenus avec des fils d'acier usuels, et leur utilisation dans l'élément annulaire (2) considéré de type 'tressé' permet à ce dernier de pouvoir s'allonger de l'ordre de 2%. L'augmentation de résistance à la rupture et en conséquence l'augmentation de matière et de fils utilisés dans l'élément annulaire (2) permet d'avoir des résistances dudit élément sous l'effet d'une flexion circonférentielle et d'une flexion perpendiculaire au plan de l'élément suffisantes pour nettement améliorer voire supprimer les montages défectueux du pneumatique, car la vraie cause des défauts de montabilité mise en évidence par les inventeurs est effectivement le manque de rigidité sous efforts de flexion d'un élément annulaire de trop faible résistance à la rupture.

Dans le cas d'un élément annulaire de type 'paquet' (fil enroulé hélicoïdalement sur plusieurs couches jusqu'à obtention de l'élément), il est possible d'obtenir avec les dits fils à grand allongement un allongement tringle de l'ordre de 4%.

Ledit grand allongement permet une meilleure efficacité de la présence de nappes de renforcement de bourrelet dans leur fonction de reprise des efforts imposés à la nappe de carcasse (1) sous l'effet de la pression de gonflage. Alors que la ou les nappes de renforcement de bourrelet reprennent la très grande partie des efforts dans le cas de l'utilisation d'un élément annulaire de très faible résistance à la rupture, lesdits efforts sont dans la présente invention mieux partagés. Une telle répartition présente l'avantage de se répercuter sur les efforts subis par les éléments de renforcement des nappes de bourrelet : alors que dans le cas où les nappes de renforcement reprennent la quasi-totalité des efforts; ce sont principalement les éléments de renforcement situés à proximité de l'élément annulaire qui sont pénalisés, tel n'est pas le cas du pneumatique conforme à l'invention.

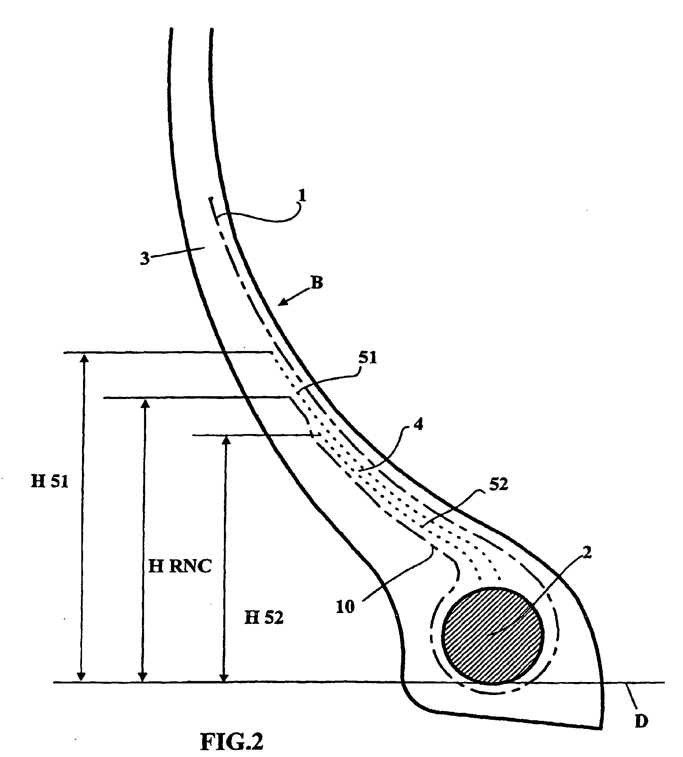

Sur la figure 2, la nappe de renforcement (4) retournée autour de l'élément annulaire (2) est remplacée par deux nappes de renforcement (51) et (52) dont les extrémités radialement intérieures sont en contact avec l'élément annulaire (2), et les extrémités radialement extérieures situées à des distances radiales H₅₁ et H₅₂ de la droite de référence D, distances respectivement égales aux distances H₄₁ et H₄₂ citées précédemment. On ne sort pas du cadre de l'invention si les distances radiales H₅₁ et H₅₂ sont respectivement égales à H₄₂ et H₄₁, ce qui rend la nappe axialement extérieure (52) plus longue que la nappe axialement intérieure (51), alors que l'exemple de la figure 1 montre un brin axialement extérieur (42) plus court que le brin axialement intérieur (41). Formées des mêmes éléments de renforcement que les brins de l'exemple précédent, les nappes de renforcement (51 et (52) sont axialement adjacentes entre elles et axialement adjacentes d'une part à la partie principale de la nappe de carcasse (1) et d'autre part au retournement (10) de ladite nappe (1), retournement accolé à la nappe axialement extérieure (52). Ledit retournement (10) a une hauteur H_{RNC} supérieure à la hauteur de l'extrémité radialement supérieure de la nappe de renforcement la plus courte, mais inférieure à la hauteur de l'extrémité de la nappe de renforcement la plus grande.

## Revendications

1. Pneumatique comprenant une armature de sommet surmontée d'une bande de roulement, ladite bande étant réunie par l'intermédiaire de deux flancs (3) à deux bourrelets B, entre lesquels s'étend au moins une nappe (1) d'armature de carcasse, ancrée dans chaque bourrelet B par enroulement autour d'un élément annulaire (2) dont la résistance à la rupture sous effort de tension est inférieure à la résistance à la rupture d'une tringle de pneumatique usuel de même dimension, et un ensemble d'au moins deux couches de renforcement (41, 42, 51, 52) de bourrelet disposées au contact de l'élément annulaire (2) et composées d'éléments de renforcement parallèles entre eux dans chaque couche et croisés d'une couche à la suivante en faisant avec la direction circonférentielle un angle α vérifiant la relation 0° < α ≤ 15°, **caractérisé en ce que** l'élément annulaire (2) a une résistance à la rupture en tension comprise entre 3 et 5 fois la tension conférée à l'armature de carcasse par la pression de gonflage recommandée, et dont l'allongement à la rupture est compris entre 2 et 6%, l'ensemble des couches de renforcement de bourrelet ayant une résistance à la rupture comprise entre 0,5 et 1 fois la résistance à la rupture de l'élément annulaire (2), et la somme des résistances à la rupture de l'élément annulaire (2) et de l'ensemble des couches de renforcement étant comprise entre 6 et 8 fois la tension conférée à l'armature de carcasse.

2. Pneumatique selon la revendication 1, **caractérisé en ce que** l'élément annulaire (2) est métallique.

3. Pneumatique selon l'une des revendications 1 ou 2, **caractérisé en ce que** les couches de renforcement de bourrelet sont formées de câbles en polyamide aromatique.

4. Pneumatique selon la revendication 1, **caractérisé en ce que** la couche (7) de mélange caoutchouteux disposé axialement et radialement à l'extérieur du bourrelet B et destiné à assurer la liaison avec la jante, a une épaisseur au plus égale à 2 mm, et le mélange de caoutchouc un module de perte élastique G" inférieur à 1, G" étant exprimé en MPa (mégapascals), la mesure de G" étant effectuée à 10% de cisaillement, à 50° et avec une fréquence de 10 Hz.

## Patentansprüche

1. Luftreifen, der eine Scheitelbewehrung, über der ein Laufstreifen angebracht ist, wobei der Laufstreifen über zwei Flanken (3) mit zwei Wülsten B verbunden ist, zwischen denen sich mindestens eine Lage (1) der Karkassenbewehrung erstreckt, die in jedem Wulst B durch einen Hochschlag um ein ringförmiges Element (2) verankert ist, dessen Reißfestigkeit unter Spannung kleiner ist als die Reißfestigkeit eines Wulstkerns eines üblichen Luftreifens gleicher Abmessung, und eine Einheit aus mindestens zwei Wulstverstärkungslagen (41, 42, 51, 52) aufweist, die in Kontakt mit dem ringförmigen Element (2) angeordnet sind und aus Verstärkungselementen zusammengesetzt sind, die in jeder Lage parallel verlaufen und von einer Lage zur nächsten gekreuzt sind, wobei sie mit der Umfangsrichtung einen Winkel α bilden, der die folgende Beziehung erfüllt: 0° < α ≤ 15°, **dadurch gekennzeichnet, dass** das ringförmige Element (2) eine Reißfestigkeit unter Spannung des 3- bis 5-Fachen der Beanspruchung aufweist, die die Karkassenbewehrung durch den empfohlenen Aufpumpdruck erfährt, und seine Reißdehnung im Bereich von 2 bis 6 % liegt, wobei die Einheit der Wulstverstärkungslagen eine Reißfestigkeit des 0,5- bis 1-Fachen der Reißfestigkeit des ringförmigen Elements (2) besitzt, und die Summe der Reißfestigkeiten des ringförmigen Elements (2) und der Einheit der Verstärkungslagen im Bereich des 6- bis 8-Fachen der Beanspruchung liegt, die die Karkassenbewehrung erfährt.

2. Luftreifen nach Anspruch 1, **dadurch gekennzeichnet, dass** das ringförmige Element (2) metallisch ist.

3. Luftreifen nach Anspruch 1 oder 2, **dadurch gekennzeichnet, dass** die Wulstverstärkungslagen aus Seilen aus einem aromatischen Polyamid gebildet sind.

4. Luftreifen nach Anspruch 1, **dadurch gekennzeichnet, dass** die Lage (7) aus einer Kautschukmischung, die axial und radial außen am Wulst B angeordnet ist und die Verbindung mit der Felge gewährleisten soll, eine Dicke von höchstens 2 mm besitzt und die Kautschukmischung einen elastischen Verlustmodul G" unter 1 aufweist, wobei G" in MPa (Megapascal) ausgedrückt ist und wobei die Messung von G" bei 10 % Scherung, 50° und einer Frequenz von 10 Hz durchgeführt wird.

## Claims

1. A tyre comprising a crown reinforcement surmounted by a tread, said tread being joined by means of two sidewalls (3) to two beads B, between which extends at least one carcass reinforcement ply (1), anchored within each bead B by winding around an annular element (2), the tensile strength of which is less than the tensile strength of a bead wire of a conventional tyre of the same dimension, and an assembly of at least two bead reinforcement layers (41, 42, 51, 52) which are arranged in contact with the annular element (2) and composed of reinforcing elements which are parallel to each other within each layer and are crossed from one layer to the next, forming an angle α satisfying the relationship 0° < α ≤ 15° with the circumferential direction,
**characterised in that** the annular element (2) has a tensile strength of between 3 and 5 times the tension imparted to the carcass reinforcement by the recommended inflation pressure, and the elongation at break of which is between 2 and 6%, all the bead reinforcement layers having a tensile strength of between 0.5 and 1 times the tensile strength of the annular element (2), and the total of the tensile strengths of the annular element (2) and of the assembly of the reinforcement layers being between 6 and 8 times the tension imparted to the carcass reinforcement.

2. A tyre according to Claim 1, **characterised in that** the annular element (2) is metallic.

3. A tyre according to one of Claims 1 or 2, **characterised in that** the bead reinforcement layers are formed of cables of aromatic polyamide.

4. A tyre according to Claim 1, **characterised in that** the layer (7) of rubber mix arranged axially and radially to the outside of the bead B and intended to provide the connection with the rim has a thickness of at most 2 mm, and the rubber mix has a modulus of elastic loss G" of less than 1, G" being expressed in MPa (megapascals), G" being measured at 10% shear, at 50° and at a frequency of 10 Hz.
